# EUROPÄISCHE PATENTSCHRIFT

(11) **EP 1 862 411 B1**
(45) Veröffentlichungstag und Bekanntmachung des Hinweises auf die Patenterteilung: **01.04.2009**
(21) Anmeldenummer: 07008183.1
(22) Anmeldetag: 23.04.2007
(51) Int. Cl.: B65G 37/02, B65G 43/08, B65G 47/71

(54) **Rollenbahnsystem sowie Verfahren zu dessen Steuerung**
Conveyor belt system and method for controlling it
Système de galets et son procédé de commande

(30) Priorität: 29.05.2006 DE 102006025240
(43) Veröffentlichungstag der Anmeldung: 05.12.2007
(73) Patentinhaber: EISENMANN Anlagenbau GmbH & Co. KG, 71032 Böblingen (DE)
(72) Erfinder: Swoboda, Werner, 71032 Böblingen (DE)
(74) Vertreter: Ostertag, Ulrich

(56) Entgegenhaltungen:
- WO-A-20/07039196
- DE-A1- 2 200 388
- DE-U1-5202005 015 09

## Beschreibung

Die Erfindung betrifft ein Rollenbahnsystem, mit
a) mehreren Trägerschlitten, die Kufen aufweisen, lesbare Datenspeicher tragen und insbesondere zum Transport von Kraftfahrzeugkarosserien vorgesehen sind,
b) Lesegeräte zum Auslesen der in den Datenspeichern gespeicherten Daten, und
c) einer Rollenbahn zum Fördern der Trägerschlitten, wobei die Rollenbahn parallel zueinander angeordnete Rollenleisten sowie eine Vielzahl von in den Rollenleisten aufgenommenen Rollen aufweist, von denen zumindest einige unabhängig voneinander durch Antriebe antreibbar sind und von denen zumindest einige mit Spurkränzen versehen sind.

Die Erfindung betrifft ferner ein Verfahren zur Steuerung eines Rollenbahnsystems nach dem Oberbegriff des Anspruchs 17.

Bei den durch Benutzung bekannten Rollenbahnsystemen der vorstehend genannten Art werden auf einer Rollenbahn Trägerschlitten gefördert, die zu transportierende Waren oder sonstige Gegenstände tragen. Besonders verbreitet sind Rollenbahnsysteme in der Automobilindustrie, um Fahrzeugkarosserien oder Teile davon zwischen einzelnen Bearbeitungsstationen zu fördern. In der Automobilindustrie werden die Trägerschlitten im allgemeinen als Skids bezeichnet.

Die bekannten Rollenbahnen weisen eine Vielzahl von Rollen auf, die in parallel zueinander angeordneten Rollenleisten aufgenommen sind. Paarweise einander gegenüberliegende Rollen sind dabei im allgemeinen über eine Welle miteinander verbunden. An einer der beiden Rollenleisten oder zwischen den beiden Rollenleisten ist üblicherweise ein Antrieb vorgesehen, der mehrere Rollen über Ketten oder Riemen antreibt. Spurkränze an den Rollen gewährleisten, daß die Trägerschlitten während des Fördervorgangs in seitlicher Richtung geführt bleiben.

Mit Hilfe von zusätzlichen Funktionseinheiten wie Querverschiebewagen, Dreh- oder Schwenktischen lassen sich komplexe Fördersysteme aufbauen, mit denen sich die zu transportierenden Waren oder Gegenstände z.B. auf unterschiedliche Bearbeitungsstationen verteilen lassen. Zur Steuerung derart komplexer Rollenbahnsysteme werden bislang zentrale speicherprogrammierbare Steuerungen eingesetzt. Von entlang der Rollenbahn angeordneten Sensoren erhält die Steuerung Informationen, ob sich ein Trägerschlitten über dem betreffenden Sensor befindet oder nicht. Auf diese Weise kann der Weg der Trägerschlitten über die Rollenbahn hinweg verfolgt werden. Da die Steuerung auch die Umsetzvorgänge an den Funktionseinheiten steuert, kann der Weg der Trägerschlitten auch nach derartigen Umsetzvorgängen weiter verfolgt werden.

Ferner ist es bekannt, an Querholmen der Trägerschlitten einfach aufgebaute Datenträger zu befestigen. Die bekannten Datenträger weisen acht kammartig angeordnete Zinken auf, die einzeln entfernbar sind. Auf diese Weise können Zahlen binär kodiert werden. Diese einfachen Datenspeicher können mit Hilfe von mittig zwischen zwei Rollenleisten angeordneten Sensoren gelesen werden, welche die Anwesenheit oder das Fehlen einzelner Zinken erkennen. Die Sensoren sind direkt mit der Steuerung verbunden, so daß dieser in größeren räumlichen Abständen nicht nur Informationen darüber erhält, ob sich ein Trägerschlitten an einem bestimmten Ort aufhält, sondern auch darüber, um welchen Trägerschlitten es sich dabei handelt.

Rollenbahnen dieser Art, jedoch ohne die vorstehend erläuterten Datenträger und Sensoren, sind in der WO-A-2007039196 beschrieben, die allerdings lediglich Stand der Technik nach Artikel 54 (3) EPÜ darstellt.

Es hat sich allerdings gezeigt, daß sich anspruchsvollere Steuerungsaufgaben mit diesen bekannten Rollenbahnsystemen nicht oder nur mit sehr hohen Kosten realisieren lassen. Zum einen sind bei den bekannten Rollenbahnsystemen alle Steuerungsaufgaben zentral in einer Steuerung vereint. Dies macht die Steuerung langsam, störanfällig und erfordert zudem einen hohen Programmieraufwand. Um die Trägerschlitten räumlich gut aufgelöst identifizieren zu können, sind sehr viele Sensoren erforderlich, die trotz des geringen Speicherinhalts der Datenspeicher relativ aufwendig in der Anschaffung und der Montage sind.

Aufgabe der Erfindung ist es deswegen, ein Rollenbahnsystem der eingangs genannten Art derart zu verbessern, daß sich das Rollenbahnsystem flexibler und einfacher steuern läßt.

Erfindungsgemäß wird diese Aufgabe durch ein Rollenbahnsystem mit den Merkmalen des Anspruchs 1 gelöst.

Durch die erfindungsgemäße Anordnung der Datenspeicher und der Lesegeräte in die Kufen bzw. in die Rollenleisten ergibt sich die Möglichkeit, die Lesegeräte (auch) zur hinreichend genauen Bestimmung der Position der Trägerschlitten zu verwenden. Dadurch können die herkömmlichen Positionssensoren teilweise oder sogar vollständig durch die Lesegeräte ersetzt werden. Sogar mit sehr preisgünstigen Datenspeichern und Lesegeräten läßt sich so die Position der Trägerschlitten auf weniger als 20 cm genau bestimmen.

Zusätzlich kann in dem Lesegerät ein Sensor integriert sein, der die Anwesenheit einer Kufe über die gesamte Länge der Kufe erfaßt.

Die Integration der Lesegeräte in die Rollenleisten erlaubt es ferner, einen hochmodularen Aufbau der Rollenbahn zu wählen, bei dem keine Lesegeräte oder andere Baugruppen zwischen den Rollenleisten angeordnet sein müssen. Außerdem ist der Montage- und Verkabelungsaufwand sehr viel geringer, wenn die Lesegeräte in die Rollenleisten integriert sind, wo sich ohnehin eine Verkabelung für die Energieversorgung und Steuerung der Antriebe für die Rollen befindet.

Diese konstruktive Vereinfachung ermöglicht es wiederum, die Steuerung der Antriebe der Rollen weitgehend dezentral in Abhängigkeit von den ausgelesenen Daten durchzuführen. Eine solche dezentrale Steuerung erfordert nämlich, daß die Lesegeräte relativ dicht beabstandet sind, um den Ort der Trägerschlitten möglichst lückenlos überwachen zu können. Das Rollenbahnsystem läßt sich dadurch in eine Vielzahl von logischen Streckenabschnitten unterteilen, die durch Lesegeräte voneinander getrennt sind. Jedes Lesegerät ermöglicht es festzustellen, ob und ggf. welcher Trägerschlitten sich in dem betreffenden Strekkenabschnitt befindet. Diese Informationen können z.B. dazu verwendet werden, unmittelbar die Antriebe des gleichen Streckenabschnitts oder auch benachbarter Streckenabschnitte anzusteuern, wenn ein Lesegerät einen Trägerschlitten erfaßt.

Eine dezentrale Steuerung der Antriebe schließt jedoch nicht aus, daß die von den Lesegeräten ausgelesenen Daten auch an eine übergeordnete Zentralsteuerung weitergeleitet werden. Dort können diese Daten beispielsweise dazu verwendet werden, den aktuellen Gesamtzustand des Rollenbahnsystems auf einem Bildschirm zu visualisieren, um dadurch manuelle Eingriffe durch eine Bedienperson zu ermöglichen.

Wenn die Datenspeicher an den Kufen jeweils am gleichen Ort angeordnet sind, so kann das Lesegerät auf die Position des Trägerschlittens zurückschließen, ohne Informationen aus dem Datenspeicher auslesen zu müssen, an welcher Stelle des Trägerschlittens sich der Datenspeicher befindet. Somit ist eine Lokalisierung der Trägerschlitten selbst dann möglich, wenn das Lesegerät nur die Anwesenheit eines Datenspeichers erfaßt, ohne jedoch Daten auszulesen. Die für die Sicherheit des Rollenbahnsystems wichtigen Informationen, wo sich die Trägerschlitten befinden, können somit selbst dann von den Lesegeräten bereitgestellt werden, wenn der Lesevorgang aufgrund einer Störung nicht möglich ist.

Bei einem vorteilhaften Ausführungsbeispiel hat jede antreibbare Rolle der Rollenbahn ihren eigenen Antrieb, der vorzugsweise als in die Rolle integrierter Nabenantrieb ausgebildet ist. Dies eröffnet die Möglichkeit, daß die Lesegeräte die angetriebenen Rollen, die sich in der Nähe des Lesegerätes befinden, individuell und ohne Mitwirkung einer Zentralsteuerung ansteuern. Auch falls mehrere Rollen über einen gemeinsamen Antrieb verfügen, so können diesen Steuerungsinformationen von den Lesegeräten über eine dezentrale Steuerungseinrichtung oder unmittelbar zuführbar sein. Zur Übermittlung der Steuerungsinformationen kann ein an sich bekanntes Bussystem verwendet werden.

Bei einer anderen vorteilhaften Ausgestaltung der Erfindung läßt sich mit den Lesegeräten der Inhalt der Datenspeicher nicht nur lesen, sondern auch im Sinne einer Schreibfunktion verändern. Dadurch können dem Trägerschlitten Informationen mit auf den Weg gegeben werden, die für nachfolgende Bearbeitungsstationen oder für den einzuschlagenden Förderweg relevant sind.

Der Förderweg wird im allgemeinen mit Hilfe von speziellen Funktionseinheiten festgelegt, die ein Umsetzen eines Trägerschlittens zwischen mindestens zwei Rollenbahnstrecken ermöglichen. Bei diesen Funktionseinheiten kann es sich z.B. um einen Drehtisch, einen Schwenktisch oder einen Querverschiebewagen handeln. Bei einem besonders vorteilhaften Ausführungsbeispiel steht mindestens ein Lesegerät mit einer Steuerung der Funktionseinheit derart in Verbindung, daß das Umsetzen eines Trägerschlittens in Abhängigkeit von den Daten erfolgt, die durch das Lesegerät aus dem Datenspeicher des betreffenden Trägerschlittens ausgelesen werden. Dadurch kann sich ein Trägerschlitten selbst seinen Weg durch ein komplexes Rollenbahnsystem stellen, wenn in dem Datenspeicher die entsprechenden Informationen für die Steuerung der Funktionseinheiten enthalten sind. Ein Zugriff durch eine Zentralsteuerung auf die Funktionseinheit ist dann nicht oder nur noch in Ausnahmefällen, z.B. bei ernsthaften Betriebsstörungen, notwendig.

Als Datenspeicher geeignet sind grundsätzlich alle Medien, mit denen sich digitale Informationen in einem gewissen Umfange speichern lassen. Neben Speicherchips, wie sie beispielsweise in kostengünstigen Transpondern eingesetzt werden, kommen aber auch magnetische oder optische Speicher prinzipiell in Betracht.

Am Markt kostengünstig erhältliche Transponder haben den Vorteil, daß sie nur geringe Abmessungen haben. Dies wiederum ermöglicht es, die Datenspeicher an den zu den Rollen weisenden Laufflächen der Kufen einzulassen. Auf diese Weise wird ein minimaler Abstand zu den in die Rollenleisten integrierten Lesegeräte erzielt, was sich günstig auf die Störanfälligkeit und die Genauigkeit der Lagebestimmung auswirkt.

Ferner ist es Aufgabe der Erfindung, ein Verfahren zur besonders flexiblen und einfachen Steuerung eines Rollenbahnsystems zum Fördern von Trägerschlitten anzugeben, die insbesondere zum Transport von Kraftfahrzeugkarosserien vorgesehen sind, wobei das Rollenbahnsystem eine Rollenbahn mit einer Vielzahl von Rollen aufweist, von denen zumindest einige unabhängig voneinander durch Antriebe antreibbar sind und von denen zumindest einige mit Spurkränzen versehen sind.

Ein diese Aufgabe lösendes Verfahren umfaßt die folgenden Schritte:
a) Auslesen von Daten aus einem Datenspeicher, der auf den Trägerschlitten angeordnet ist, mit Hilfe eines in die Rollenbahn integrierten Lesegeräts;
b) Steuerung wenigstens eines Antriebs durch das Lesegerät ohne Beteiligung einer Zentralsteuerung in Abhängigkeit von den in Schritt a) ausgelesenen Daten.

Die oben zu dem Rollenbahnsystem genannten Vorteile und vorteilhaften Ausgestaltungen gelten für das erfindungsgemäße Verfahren entsprechend.

Weitere Vorteile und Merkmale der Erfindung ergeben sich auch der nachfolgenden Beschreibung eines bevorzugten Ausführungsbeispiels anhand der Zeichnung. Darin zeigen:
- Figur 1: einen Ausschnitt aus einem Rollenbahnsystem mit mehreren unterschiedlichen Funktionseinheiten in einer perspektivischen Darstellung;
- Figur 2: eines der Rollenbahnmodule, aus denen das in der Figur 1 dargestellte Rollenbahnsystem aufgebaut ist, in einer perspektivischen Darstellung;
- Figur 3: einen Längsschnitt durch eine Rollenleiste des in der Figur 2 gezeigten Rollenbahnmoduls mit einer auf einer Rolle ablaufenden Skidkufe;
- Figur 4: eine perspektivische, teilweise aufgebrochene Darstellung einer Rollenleiste mit freigelegter Stirnseite gemäß einem anderen Ausführungsbeispiel der Erfindung.

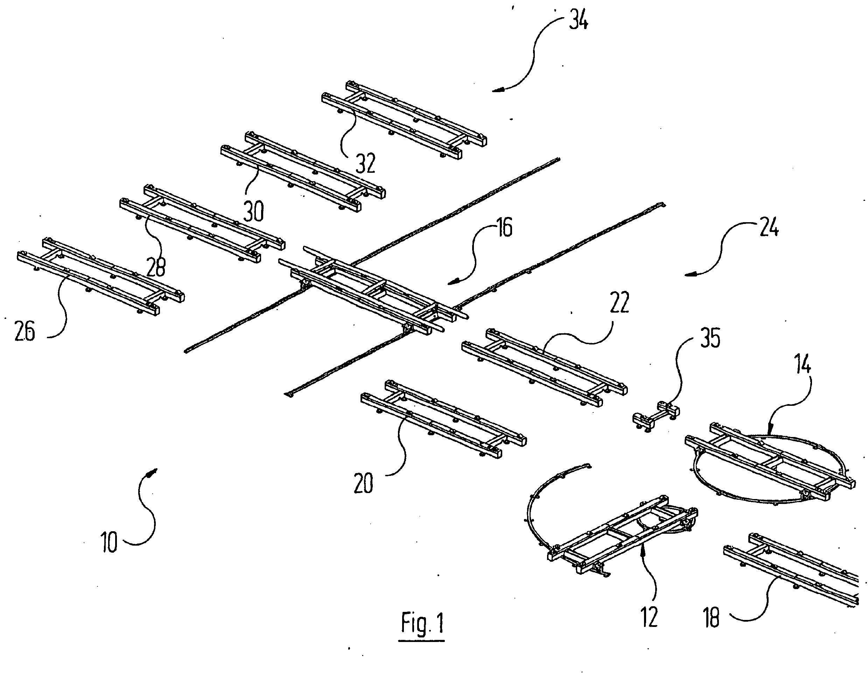

Die Figur 1 zeigt ausschnittsweise ein insgesamt mit 10 bezeichnetes Rollenbahnsystem in einer perspektivischen Darstellung. Das Rollenbahnsystem 10 ist zum Fördern von Skids ausgelegt, mit denen in der Automobilindustrie Kraftfahrzeugkarosserien oder Teile davon transportiert werden. Bei den Skids, die in der Figur 1 nicht dargestellt sind, handelt es sich um Trägerschlitten, die meist zwei über Querträger miteinander verbundene und zueinander parallel verlaufende Kufen sowie Befestigungsmöglichkeiten für die zu transportierenden Gegenstände aufweisen.

In den Fertigungsstätten der Automobilindustrie werden die Skids mit Hilfe des Rollenbahnsystems 10 zwischen und häufig auch innerhalb unterschiedlicher Bearbeitungsstationen transportiert. Das in der Figur 1 gezeigte Rollenbahnsystem 10 könnte beispielsweise dafür vorgesehen sein, Kraftfahrzeugkarosserien zwischen einer Karosserie-Fertigungsstation und einer Oberflächenbehandlungsanlage mit mehreren Behandlungslinien zu transportieren.

Um Skids mit darauf befestigten Kraftfahrzeugkarosserien puffern und auf unterschiedliche Behandlungslinien verteilen zu können, weist das Rollenbahnsystem 10 mehrere Funktionseinheiten auf, die ein Umsetzen von Skids zwischen unterschiedlichen Rollenbahnstrecken zu ermöglichen. Bei dem in der Figur 1 gezeigten Ausführungsbeispiel handelt es sich bei diesen Funktionseinheiten um einen Schwenktisch 12, einen Drehtisch 14 und einen Querverschiebewagen 16. Mit Hilfe des Schwenktischs 12 und des Drehtischs 14 können über eine Zuführstrecke 18 zugeführte Skids auf zwei Pufferstrecken 20, 22 eines Pufferbereichs 24 verteilt werden. Der Querverschiebewagen 16 ermöglicht dann eine Weiterverteilung der im Pufferbereich 24 wartenden Skids auf eine der 26, 28, 30, 32 bezeichneten Speicherstrecken eines Sortier- und Speicherbereichs 34. Von dort werden die Skids von einem anderen Fördersystem übernommen und durch die entsprechende Behandlungslinie der Oberflächenbehandlungsanlage gefördert.

Wie man der Figur 1 entnehmen kann, ist die Rollenbahn des Röllenbahnsystems 10 aus einer Vielzahl gleichartiger Rollenbahnmodule aufgebaut. Dies gilt auch für den Schwenktisch 12, den Drehtisch 14 und den Querverschiebewagen 16, deren Konstruktion ebenfalls auf den gleichen Rollenbahnmodulen basiert. Bei einem mit 35 bezeichneten Rollenbock zwischen dem Drehtisch 14 und der Pufferstrekke 22 handelt es sich um ein kürzeres Rollenbahnmodul, das nur zwei Rollen enthält und beispielsweise dort vorteilhaft eingesetzt werden kann, wo zahlreiche andere Anlagenteile die Förderstrecke kreuzen oder ein größerer Abstand zwischen den Rollenbahnmodulen überbrückt werden muß.

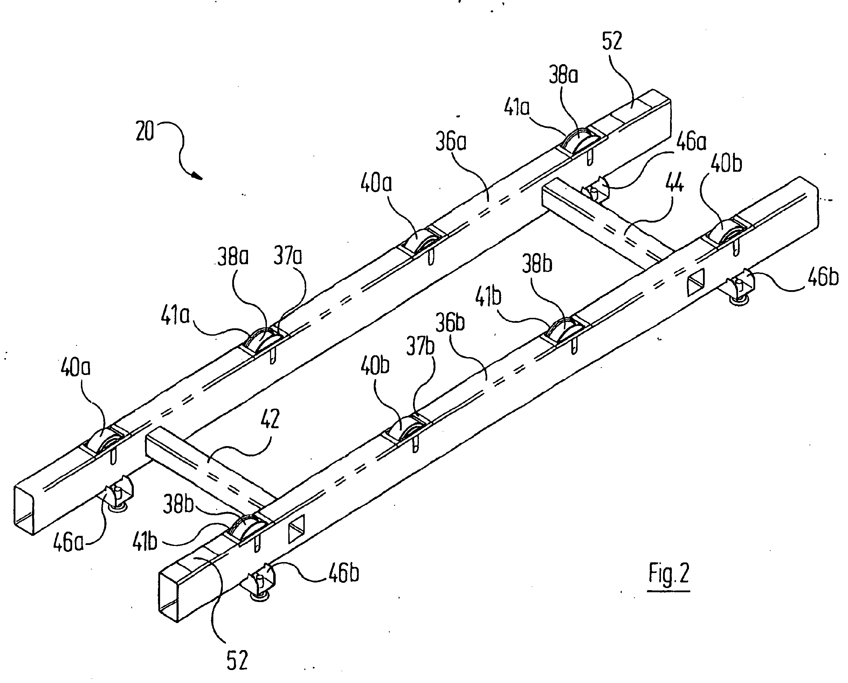

Die Figur 2 zeigt ein einzelnes Rollenbahnmodul in einer perspektivischen Darstellung. Die Pufferstrecke 20 weist zwei Rollenleisten 36a, 36b auf, bei denen es sich im dargestellten Ausführungsbeispiel jeweils um Hohlprofilträger mit rechteckigem Querschnitt handelt. In der Rollenleiste 36a sind zwei angetriebene Transportrollen 38a und zwei nicht angetriebene Transportrollen 40a abwechselnd entlang der Längsrichtung des Rollenbahnmoduls angeordnet. Bei dem dargestellten Ausführungsbeispiel sind nur die angetriebenen Transportrollen 38a mit Spurkränzen 41a versehen, um die darauf ablaufenden Kufen der Skids in seitlicher Richtung zu führen.

Jede angetriebene Transportrolle 38a enthält einen eigenen integrierten elektrischen Nabenantrieb, der mit den angetriebenen Transportrollen 38a eine kompakte Baugruppe bildet. Diese Baugruppen werden bei der Montage der Rollenleiste 36a in Aussparungen eingesetzt, die an der Oberseite der Rollenleiste 36a z.B. durch Laserschneiden freigelegt werden. Nach dem Einsetzen dieser Baugruppen können zwischen den Transportrollen 38a und der Oberseite der Rollenleiste 36a verbleibende Spalte durch Einsetzen eines rechteckigen Rahmenteils 37a verkleinert werden. Entsprechendes gilt auch für die nicht angetriebenen Transportrollen 40a, nur daß diese keinen Nabenantrieb haben.

Die andere Rollenleiste 36b ist in gleicher Weise ausgeführt, nur daß dort die angetriebenen Transportrollen 38b so versetzt zu den angetriebenen Transportrollen 38a der Rollenleiste 36a angeordnet sind, daß auf einer Höhe in Längsrichtung eine angetriebene Transportrolle 38a, 38b. jeweils einer nicht angetriebenen Transportrolle 40b bzw. 40a gegenübersteht.

Die vorstehend beschriebene Anordnung der angetriebenen und nicht angetriebenen Transportrollen ist nur beispielhaft. Ganz allgemein hängt diese Anordnung bei Rollenbahnförderern vor allem von der Art und den Abmessungen der zu fördernden Förderschlitten und dem Gewicht der darauf zu transportierenden Gegenstände ab.

Die beiden Rollenleisten 36a, 36b sind über zwei Quertraversen 42, 44 starr miteinander verbunden. Das gesamte Rollenbahnmodul ist bei dem dargestellten Ausführungsbeispiel auf Bodenträgern 46a, 46b befestigt, welche die Rollenleisten 36a bzw. 36b von unten her umgreifen. Die Bodenträger 46a, 46b werden auf einem Montageboden oder einer ähnlichen Tragstruktur befestigt und können zum Ausgleich von Bodenunebenheiten in der Höhe justierbar sein.

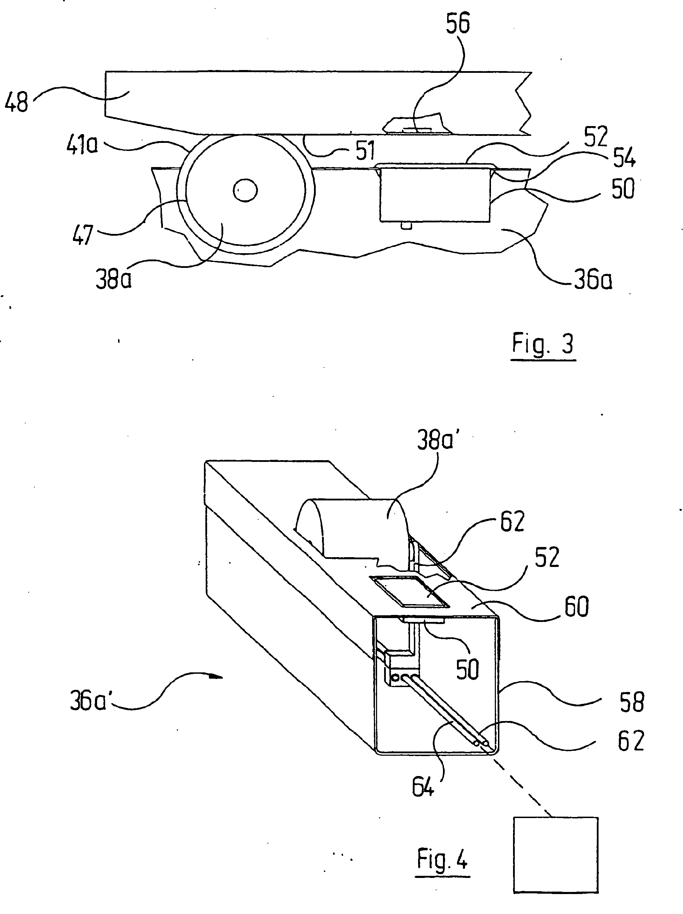

Die Figur 3 zeigt ausschnittsweise einen Schnitt durch die Rollenleiste 36a entlang der Längsrichtung. Auf einer Lauffläche 47 einer der angetriebenen Transportrollen 38a liegt eine Skidkufe 48 mit ihrer unteren Kufenfläche 51 auf. Neben der angetriebenen Transportrolle 38a ist ein Lesegerät 50 in der Rollenleiste 36a angeordnet, das ein mit 52 bezeichnetes Sensorfenster hat. Das Sensorfenster 52 ist in eine Aussparung 54 an der Oberseite der Rollenleiste 36a eingelassen.

In die untere Kufenfläche 51 der Skidkufe 48 ist ein Datenspeicher in Form eines passiven Transponders 56 derart eingelassen, daß die Kufenfläche 51 frei von Vorsprüngen bleibt. Der passive Transponder 56 hat die Eigenschaft, daß er die zur Kommunikation mit dem Lesegerät 50 und zur Abarbeitung interner Prozesse benötigte Energie ausschließlich aus einem von dem Lesegerät 50 erzeugten Feld bezieht. Ausgelöst durch ein von dem Lesegerät 50 erzeugten Signal kann der Transponder 56 darin gespeicherte Daten an das Lesegerät 50 drahtlos übermitteln. Bei diesen Daten kann es sich beispielsweise um eine Skidnummer handeln, die eindeutig dem betreffenden Skid zugeordnet ist. Ferner können Daten in dem Transponder 56 gespeichert sein, die sich auf den zu transportierenden Gegenstand beziehen. Beim Transport von Kraftfahrzeugkarosserien kann es sich dabei beispielsweise um die Angabe bestimmter Karosserietypen oder um Informationen handeln, auf welche Weise die Karosserie in der Oberflächenbehandlungsanlage beschichtet werden soll.

Die Figur 4 zeigt in einer perspektivischen Darstellung einen Ausschnitt aus einer Rollenleiste 36a' gemäß einem anderen Ausführungsbeispiel. Im Gegensatz zu dem vorstehend beschriebenen Ausführungsbeispiel weist die Rollenleiste 36a' keinen Hohlprofilträger mit rechteckigem Querschnitt, sondern einen U-förmigen Träger 58 auf. Dieser ist mit einer Abdeckung 60 abgedeckt, die mit Aussparungen für die Rollen und die Sensorfenster 52 der Lesegeräte 50 versehen ist. In der Figur 4 ist ebenfalls eine angetriebene Transportrolle 38a' erkennbar, jedoch ist diese nicht mit einem Spurkranz zur Seitenführung der Skidkufen 48 versehen.

Der Nabenantrieb der angetriebenen Transportrolle 38a' ist über innerhalb eines Kabelschuhs 62 verlaufende Leitungen mit einer Leitung 62 zur Spannungsversorgung und mit einem Datenbus 64 verbunden. In dem Kabelschuh 62 verlaufen auch Leitungen, welche das Lesegerät 50 an die Leitung 62 für die Spannungsversorgung und den Datenbus 64 anschließen. Der Datenbus 64 steht mit einer Segmentsteuerung in Verbindung, welche alle angetriebenen Transportrollen eines Rollenbahnsegmentes steuert. Mehrere Segmentsteuerungen arbeiten dabei mit einer übergeordneten Zentralsteuerung des Rollenbahnsystems 10 zusammen.

Das Rollenbahnsystem 10 funktioniert wie folgt:

In einem einfachsten Funktionsmodus werden die Datenspeicher 56 und die Lesegeräte 50 lediglich zur Positionsbestimmung der Skids verwendet, ohne daß die in den Datenspeichern 56 enthaltenen Daten ausgelesen und weiterverarbeitet werden. Die Datenspeicher 56 und Lesegeräte 50 ersetzen somit die bislang verwendeten Positionssensoren, die zur Positionsbestimmung der Skids eingesetzt werden. Selbstverständlich ist es möglich, nur einen Teil der bisher vorgesehenen Positionssensoren durch Lesegeräte 50 zu ersetzen. So können beispielsweise die Lesegeräte 50 dazu verwendet werden, eine Umschaltung der Geschwindigkeit zu veranlassen, während zusätzliche Positionssensoren herkömmlicher Bauart eine Endposition der Skids erfassen.

Wird ein Skid über die Rollenbahn gefördert, so überstreicht irgendwann der in die Skidkufe 48 eingelassene Transponder 56 das Sensorfenster 52 des Lesegeräts 50. Der Transponder 56 antwortet dabei auf von dem Lesegerät 50 fortwährend ausgesendete Signale. Die Antwortsignale des Transponders 56 werden von dem Lesegerät 50 erfaßt. Der Transponder 56 und das Lesegerät 50 können dabei so ausgelegt sein, daß eine Erfassung erst dann erfolgt, wenn sich der Transponder 56 in unmittelbarer Nähe, z.B. in einem Abstand von weniger als 20 cm, zu dem Lesegerät 50 befindet.

Durch die Erfassung des Transponders 56 durch das Lesegerät 50 kann somit die Anwesenheit eines Skids über dem Lesegerät 50 präzise erfaßt werden. Diese Information kann beispielsweise dazu verwendet werden, den Skid über eine vorgebbare Wegstrecke abzubremsen, um einen Stillstand in einer bestimmten neuen Position zu erreichen. Die dezentrale Segmentsteuerung sendet hierzu über den Datenbus 64 entsprechende Steuersignale an die betroffenen Nabenmotoren der Transportrollen 38a, 38b. Die Information, daß sich ein Skid über dem Lesegerät 50 befindet, kann auch an die übergeordnete Zentralsteuerung weitergegeben werden, um sie dort beispielsweise auf einem Bildschirm zu visualisieren.

Bei einem bevorzugten zweiten Funktionsmodus werden von dem Lesegerät 50 auch die in dem Transponder 56 gespeicherten Daten ausgelesen. Anhand dieser Daten können sowohl in den dezentralen Segmentsteuerungen als auch in der übergeordneten Zentralsteuerung eine Vielzahl von Funktionen ausgelöst oder beeinflußt werden. Durch Kenntnis der Information, welcher Skid mit welchem zu transportierenden Gegenstand sich an einem bestimmten Lesegerät befindet, kann der gesamte Arbeitsfortschritt mitprotokolliert werden. Da vorzugsweise jedes Rollenbahnmodul ein oder besser noch zwei an entgegengesetzten Enden angeordnete Lesegeräte 50 aufweist, wie dies die Figur 2 zeigt, ist somit eine sehr lückenlose Überwachung des Arbeitsfortschritts möglich. Die Anwesenheit eines Skids auf dem Rollenbahnmodul kann gegebenenfalls durch einen im Lesegerät integrierten Sensor überwacht werden.

Ferner können auf der Grundlage der ausgelesenen Daten die Prozeßwege im Rollenbahnsystem 10 flexibel und dynamisch gewählt werden. Ist beispielsweise die Pufferstrekke 20 bereits belegt, so können durch die Segmentsteuerung der Schwenktisch 12 und der Drehtisch 14 so angesteuert werden, daß der nächste über die Zuführstrecke 18 zugeführte Skid automatisch auf die zweite Pufferstrecke 22 im Pufferbereich 24 geleitet wird.

Ist der Skid oder die darauf befestigte Kraftfahrzeugkarosserie defekt, so kann diese Information ebenfalls in dem Transponder 56 gespeichert sein. Ein Lesegerät 50 in der Nähe einer Ausschleusungseinheit kann dann veranlassen, daß der betreffende Skid ausgeschleust wird.

Auch eine Beeinflussung der Fahrgeschwindigkeit in Abhängigkeit davon, ob ein Skid leer fährt oder eine Kraftfahrzeugkarosserie trägt, kann durch die in den Lesegeräten 50 ausgelesenen Daten veranlaßt werden.

Bei dem vorstehend beschriebenen Ausführungsbeispiel wurde angenommen, daß die Lesegeräte 50 über den Datenbus 64 ihre Informationen an die Segmentsteuerung weiterleiten, die ihrerseits die Antriebe der Transportrollen 38a, 38a' oder die Funktionseinheiten 12, 14, 16 ansteuern. Daneben besteht jedoch auch die Möglichkeit, die Lesegeräte 50 unmittelbar, d.h. ohne Mitwirkung einer dezentralen Segmentsteuerung, mit den Antrieben der Transportrollen 38a, 38a' kommunizieren zu lassen. Hierzu ist lediglich erforderlich, daß entweder die Antriebe der Transportrollen oder aber die Lesegeräte 50 über eine geeignete Schnittstelle verfügen, die eine unmittelbare Kommunikation zwischen den Lesegeräten 50 und den Antrieben der Transportrollen 38a, 38b ermöglicht. Eine solche unmittelbare Kommunikation erfordert nicht zwangsläufig das Vorsehen einer eigenen elektrischen Verbindung, da auch über den ohnehin vorhandenen Datenbus 64 Daten unmittelbar, d.h. ohne Zwischenschaltung einer dezentralen Segmentsteuerung, von dem Lesegerät 50 an die Antriebe der Transportrollen 38a, 38b übertragen werden können.

## Patentansprüche

1. Rollenbahnsystem, mit
a) mehreren Trägerschlitten, die Kufen (48) aufweisen, lesbare Datenspeicher (56) tragen und insbesondere zum Transport von Kraftfahrzeugkarosserien vorgesehen sind,
b) Lesegeräten (50) zum Auslesen der in den Datenspeichern (56) gespeicherten Daten, und
c) einer Rollenbahn zum Fördern der Trägerschlitten, wobei die Rollenbahn parallel zueinander angeordnete Rollenleisten (36a, 36b) sowie eine Vielzahl von in den Rollenleisten (36a, 36b) aufgenommenen'Rollen (38a, 38b, 40a, 40b; 38a') aufweist, von denen zumindest einige (38a, 38b; 38a') unabhängig voneinander durch Antriebe antreibbar sind und von denen zumindest einige mit Spurkränzen (41a, 41b) versehen sind,
**dadurch gekennzeichnet,**
**daß** die Datenspeicher (56) in den Kufen (48) und die Lesegeräte (50) in den Rollenleisten (36a, 36b) aufgenommen sind.

2. Rollenbahnsystem nach Anspruch 1, **dadurch gekennzeichnet, daß** die Datenspeicher (56) an den Kufen (48) jeweils am gleichen Ort angeordnet sind.

3. Rollenbahnsystem nach Anspruch 1 oder 2, **dadurch gekennzeichnet, daß** jede antreibbare Rolle (38a, 38b; 38a') ihren eigenen Antrieb aufweist.

4. Rollenbahnsystem nach Anspruch 3, **dadurch gekennzeichnet, daß** die Antriebe als in die Rolle (38a, 38b; 38a') integrierte Nabenantriebe ausgebildet sind.

5. Rollenbahnsystem nach einem der vorhergehenden Ansprüche, **dadurch gekennzeichnet, daß** durch die Lesegeräte (50) der Ort eines Datenspeichers (56) auf mindestens 20 cm genau erfaßbar ist.

6. Rollenbahnsystem nach einem der vorhergehenden Ansprüche, **dadurch gekennzeichnet, daß** in den Lesegeräten (50) ein Sensor integriert ist, durch den die Anwesenheit einer Kufe über deren gesamte Länge erfaßbar ist.

7. Rollenbahnsystem nach einem der vorhergehenden Ansprüche, **gekennzeichnet durch** eine dezentrale Steuerungseinrichtung zur Steuerung der Antriebe.

8. Rollenbahnsystem nach Anspruch 7, **dadurch gekennzeichnet, daß** den Antrieben Steuerungsinformationen von den Lesegeräten (50) über die dezentrale Steuerungseinrichtung zuführbar sind.

9. Rollenbahnsystem nach einem der Ansprüche 1 bis 7, **dadurch gekennzeichnet, daß** den Antrieben Steuerungsinformationen unmittelbar von den Lesegeräten (50) zuführbar sind.

10. Rollenbahnsystem nach einem der Ansprüche 8 oder 9, **dadurch gekennzeichnet, daß** die Steuerungsinformationen binär kodiert sind.

11. Rollenbahnsystem nach einem der Ansprüche 8 bis 10, **gekennzeichnet durch** ein Bussystem (64) zur Übermittlung der Steuerungsinformationen.

12. Rollenbahnsystem nach einem der vorhergehenden Ansprüche, **dadurch gekennzeichnet, daß** sich mit den Lesegeräten (50) der Inhalt der Datenspeicher (56) verändern läßt.

13. Rollenbahnsystem nach einem der vorhergehenden Ansprüche, **dadurch gekennzeichnet, daß** die Rollenbahn Funktionseinheiten (12, 14, 16) hat, die ein Umsetzen eines Trägerschlittens zwischen mindestens zwei Rollenbahnstrecken (12, 20, 22, 26, 28, 30, 32) ermöglichen.

14. Rollenbahnsystem nach Anspruch 13, **dadurch gekennzeichnet, daß** die Funktionseinheit ein Drehtisch (14), ein Schwenktisch (12) oder eine Querverschiebewagen (16) ist.

15. Rollenbahnsystem nach einem der Ansprüche 13 oder 14, **dadurch gekennzeichnet, daß** mindestens ein Lesegerät (50) mit einer Steuerung der Funktionseinheit derart in Verbindung steht, daß das Umsetzen eines Trägerschlittens in Abhängigkeit von den Daten erfolgt, die durch das Lesegerät aus dem Datenspeicher (56) des betreffenden Trägerschlittens ausgelesen werden.

16. Rollenbahnsystem nach einem der vorhergehenden Ansprüche, **dadurch gekennzeichnet, daß** die Datenspeicher (56) an den zu den Rollen (38a, 38b, 40a, 40b; 38a') weisenden Laufflächen (55) der Kufen (48) eingelassen sind.

17. Verfahren zur Steuerung eines Rollenbahnsystems (10) zum Fördern von Trägerschlitten, die insbesondere zum Transport von Kraftfahrzeugkarosserien vorgesehen sind, auf einer Rollenbahn, die eine Vielzahl von Rollen (38a, 38b, 40a, 40b; 38a') aufweist, von denen zumindest einige (38a, 38b; 38a') unabhängig voneinander durch Antriebe antreibbar sind und von denen zumindest einige mit Spurkränzen (41a, 41b) versehen sind, **gekennzeichnet durch** folgende Schritte:
a) Auslesen von Daten aus einem Datenspeicher (56), der auf den Trägerschlitten angeordnet ist, mit Hilfe eines in die Rollenbahn integrierten Lesegeräts (50);
b) Steuerung wenigstens eines Antriebs **durch** das Lesegerät (50) ohne Beteiligung einer Zentralsteuerung in Abhängigkeit von den in Schritt a) ausgelesenen Daten.

18. Verfahren nach Anspruch 17, **dadurch gekennzeichnet, daß** das Lesegerät (50) ferner unmittelbar den Weg eines Trägerschlittens an einem Verzweigungspunkt in Abhängigkeit von den in Schritt a) ausgelesenen Daten steuert.

## Claims

1. Roller conveyor system, with
a) multiple carrier slides, which have runners (48), carry readable data memories (56) and in particular are provided for transport of motor vehicle bodies,
b) readers (50) for reading out the data stored in the data memories (56), and
c) a roller conveyor to convey the carrier slides, the roller conveyor having roller rails (36a, 36b), which are arranged parallel to each other, and multiple rollers (38a, 38b, 40a, 40b; 38a') which are accommodated in the roller rails (36a, 36b), and of which at least some (38a, 38b; 38a') can be driven independently of each other by drives, and of which at least some are provided with flanges (41a, 41b),
**characterized in that**
the data memories (56) are accommodated in the runners (48), and the readers (50) in the roller rails (36a, 36b).

2. Roller conveyor system according to Claim 1, **characterized in that** the data memories (56) are each arranged on the runners (48) at the same location.

3. Roller conveyor system according to Claim 1 or 2, **characterized in that** each drivable roller (38a, 38b; 38a') has its own drive.

4. Roller conveyor system according to Claim 3, **characterized in that** the drives are in the form of hub drives which are integrated in the roller (38a, 38b; 38a').

5. Roller conveyor system according to one of the preceding claims, **characterized in that** the readers (50) can detect the location of a data memory (56) with at least 20 cm precision.

6. Roller conveyor system according to one of the preceding claims, **characterized in that** in the readers (50), a sensor, by which the presence of a runner can be detected over its whole length, is integrated.

7. Roller conveyor system according to one of the preceding claims, **characterized by** a decentralised controller to control the drives.

8. Roller conveyor system according to Claim 7, **characterized in that** control information can be fed from the readers (50) via the decentralised controller to the drives.

9. Roller conveyor system according to one of Claims 1 to 7, **characterized in that** control information can be fed from the readers (50) directly to the drives.

10. Roller conveyor system according to one of Claims 8 or 9, **characterized in that** the control information is binary coded.

11. Roller conveyor system according to one of Claims 8 to 10, **characterized by** a bus system (64) to transmit the control information.

12. Roller conveyor system according to one of the preceding claims, **characterized in that** the content of the data memories (56) can be changed using the readers (56).

13. Roller conveyor system according to one of the preceding claims, **characterized in that** the roller conveyor has functional units (12, 14, 16), which make it possible to transfer a carrier slide between at least two roller conveyor sections (12, 20, 22, 26, 28, 30, 32).

14. Roller conveyor system according to Claim 13, **characterized in that** the functional unit is a rotary table (14), a swing table (12) or a transverse movement vehicle (16).

15. Roller conveyor system according to one of Claims 13 or 14, **characterized in that** at least one reader (50) is connected to a controller of the functional unit in such a way that a carrier slide is transferred depending on the data which the reader reads out of the data memory (56) of the relevant carrier slide.

16. Roller conveyor system according to one of the preceding claims, **characterized in that** the data memories (56) are embedded on the running surfaces (55) of the runners (48) facing the rollers (38a, 38b, 40a, 40b; 38a').

17. Method of controlling a roller conveyor system (10) for conveying carrier slides, which in particular are provided for transport of motor vehicle bodies, on a roller conveyor which has multiple rollers (38a, 38b, 40a, 40b; 38a'), of which at least some (38a, 38b; 38a') can be driven independently of each other by drives, and of which at least some are provided with flanges (41a, 41b), **characterized by** the following steps:
a) reading data out of a data memory (56), which is arranged on the carrier slide, using a reader (50) which is integrated into the roller conveyor;
b) control of least one drive by the reader (50), without participation of a central controller, depending on the data which is read out in step a).

18. Method according to Claim 17, **characterized in that** the reader (50) also controls the path of a carrier slide at a branch point directly, depending on the data which is read out in step a).

## Revendications

1. Système transporteur à galets, avec
a) plusieurs chariots porteurs qui présentent des patins (48), portent des mémoires de données pouvant être lues (56) et sont notamment prévus pour le transport de carrosseries de véhicules,
b) des appareils de lecture (50) pour lire les données mémorisées dans les mémoires de données (56), et
c) un transporteur à galets pour transporter les chariots porteurs, sachant que le transporteur à galets présente des rails à galets (36a, 36b) disposés parallèlement entre eux ainsi qu'une multiplicité de galets (38a, 38b, 40a, 40b ; 38a') reçus dans les rails à galets (36a, 36b), parmi lesquels au moins certains (38a, 38b ; 38a') peuvent être entraînés indépendamment les uns des autres par des entraînements et parmi lesquels au moins certains sont pourvus de boudins (41a, 41 b),
**caractérisé en ce que** les mémoires de données (56) sont reçues dans les patins (48) et les appareils de lecture (50) dans les rails à galets (36a, 36b).

2. Système transporteur à galets selon la revendication 1, **caractérisé en ce que** les mémoires de données (56) sont respectivement disposées au même emplacement sur les patins (48).

3. Système transporteur à galets selon la revendication 1 ou 2, **caractérisé en ce que** chaque galet entraînable (38a, 38b ; 38a') présente son propre entraînement.

4. Système transporteur à galets selon la revendication 3, **caractérisé en ce que** les entraînements sont réalisés sous la forme d'entraînements dans le moyeu, intégrés dans les galets (38a, 38b ; 38a').

5. Système transporteur à galets selon l'une des revendications précédentes, **caractérisé en ce que** les appareils de lecture (50) peuvent détecter l'emplacement d'une mémoire de données (56) avec une précision d'au moins 20 cm.

6. Système transporteur à galets selon l'une des revendications précédentes, **caractérisé en ce qu'**un capteur est intégré dans les appareils de lecture (50), qui permet de détecter la présence d'un patin sur toute sa longueur.

7. Système transporteur à galets selon l'une des revendications précédentes, **caractérisé par** un dispositif de commande décentralisé pour commander les entraînements.

8. Système transporteur à galets selon la revendication 7, **caractérisé en ce que** des informations de commande peuvent être apportées aux entraînements par les appareils de lecture (50) par l'intermédiaire du dispositif de commande décentralisé.

9. Système transporteur à galets selon l'une des revendications 1 à 7, **caractérisé en ce que** des informations de commande peuvent être directement apportées aux entraînements par les appareils de lecture (50).

10. Système transporteur à galets selon la revendication 8 ou 9, **caractérisé en ce que** les informations de commande sont codées en binaire.

11. Système transporteur à galets selon l'une des revendications 8 à 10, **caractérisé par** un système de bus (64) pour la transmission des informations de commande.

12. Système transporteur à galets selon l'une des revendications précédentes, **caractérisé en ce que** le contenu des mémoires de données (56) peut être modifié au moyen des appareils de lecture (50).

13. Système transporteur à galets selon l'une des revendications précédentes, **caractérisé en ce que** le transporteur à galets possède des unités fonctionnelles (12, 14, 16) qui permettent de transférer un chariot porteur entre au moins deux sections de transporteur à galets (12, 20, 22, 26, 28, 30, 32).

14. Système transporteur à galets selon la revendication 13, **caractérisé en ce que** l'unité fonctionnelle est une table tournante (14), une table pivotante (12) ou un chariot à translation latérale (16).

15. Système transporteur à galets selon la revendication 13 ou 14, **caractérisé en ce qu'**au moins un appareil de lecture (50) est relié à une commande de l'unité fonctionnelle de telle sorte que le transfert d'un chariot porteur s'effectue en fonction des données qui sont lues par l'appareil de lecture dans la mémoire de données (56) du chariot porteur concerné.

16. Système transporteur à galets selon l'une des revendications précédentes, **caractérisé en ce que** les mémoires de données (56) sont encastrées sur les surfaces de portée (51), tournées vers les galets (38a, 38b, 40a, 40b ; 38a'), des patins (48).

17. Procédé de commande d'un système transporteur à galets (10) destiné à transporter des chariots porteurs, qui sont notamment prévus pour le transport de carrosseries de véhicules, sur un transporteur à galets qui présente une multiplicité de galets (38a, 38b, 40a, 40b ; 38a'), parmi lesquels au moins certains (38a, 38b ; 38a') peuvent être entraînés indépendamment les uns des autres par des entraînements et parmi lesquels au moins certains sont pourvus de boudins (41a, 41b), **caractérisé par** les étapes suivantes :
a) lecteur de données à partir d'une mémoire de données (56) qui est disposée sur le chariot porteur, à l'aide d'un appareil de lecture (50) intégré dans le transporteur à galets,
b) commande d'au moins un entraînement par l'appareil de lecture (50) sans participation d'une commande centrale, en fonction des données lues à l'étape a).

18. Procédé selon la revendication 17, **caractérisé en ce que** l'appareil de lecture (50) commande en outre directement le parcours d'un chariot porteur en un point de bifurcation, en fonction des données lues à l'étape a).
